# EUROPEAN PATENT SPECIFICATION

(11) **EP 3 200 404 B1**
(45) Date of publication and mention of the grant of the patent: **23.05.2018**
(21) Application number: 14902333.5
(22) Date of filing: 10.12.2014
(51) Int. Cl.: H04L 12/721, H04W 40/24, H04L 12/751, H04L 12/733

(54) **CONTENT-CENTRIC NETWORK ON-DEMAND DISTANCE VECTOR ROUTE METHOD**
ABSTANDSVEKTORROUTENVERFAHREN AUF ANFRAGE FÜR INHALTSZENTRIERTES NETZWERK
PROCÉDÉ DE ROUTAGE À VECTEUR DE DISTANCE À LA DEMANDE DANS UN RÉSEAU CENTRÉ SUR LE CONTENU

(30) Priority: 23.09.2014 CN 201410492153
(43) Date of publication of application: 02.08.2017
(73) Proprietor: Institute of Acoustics, Chinese Academy of Sciences, Haidian District Beijing 100190 (CN)
(72) Inventor: WANG, Jinlin, Beijing 100190 (CN); QI, Weining, Beijing 100190 (CN); YOU, Jiali, Beijing 100190 (CN); WANG, Lingfang, Beijing 100190 (CN)
(74) Representative: Hanna Moore + Curley
(86) International application number: PCT/CN2014/093490
(87) International publication number: WO 2016/045199

(56) References cited:
- EP-A1- 2 562 978
- WO-A1-2007/015822
- CN-A- 103 595 637
- CN-A- 103 841 099
- US-A1- 2013 219 081

## Description

### TECHNICAL FIELD

The present invention relates to a network routing method, and in particular to a content-centric network on-demand distance vector route method.

### BACKGROUND OF THE INVENTION

A content-centric network (CCN) represents a network structure with content or information as the center. The CCN takes content as the center, and does not concern a provider of the content, but concerns the content itself only. The CCN better satisfies requirements for information content consumption by naming of content and routing based on content naming. The CCN discards a traditional protocol stack structure with IP as thin waist, and adopts a protocol stack structure with a content name as the core, which is compatible with different transmission manners (IP, Ethernet, P2P, etc.) downwards, and supports different service applications (content distributing, streaming media, voice of internet phone, etc.) upwards. This design idea with content as the center causes the CCN to support congenitally a movement of the content and a user in a network, provide a trustable certification of information, and be capable of improving greatly the broadcasting efficiency of the information in the network, and have incomparable superiority in architecture over the traditional IP network. A example of On-Demand routing is described in document WO2007/015822A1.

In 2012, in order to be capable of updating automatically an FIB table according to a change of network topology when deployed on a CCN testbed, the NDN project group proposes an OSPFN routing method on the basis of OSPF. However, the OSPFN routing method is not optimized for the defects of the large number of route table items and the slow route lookup.

Thereafter, the NDN project group proposes the named-data link state routing method NLSR. The NLSR protocol further describes a method for naming a router and a link based on a URL, determines a format of an information packet for link state of interaction between neighboring nodes, and describes related multi-path computation and route failure recovery mechanism. However the NLSR does not solve the problem that the route table items are difficult to be aggregated when routing is performed in CCN.

In sum, the existing content-centric network performs a route query based on data naming, which itself has a contradiction between a limitless naming space and limited route table items. It is a problem to be solved that how to compress route table items by suitable route packets and decreasing route entries as much as possible.

### SUMMARY OF THE INVENTION

An objective of the present invention lies in that in order to overcome defects existing in the routing method of the content-centric network in the prior art, the present invention provides an on-demand distance vector route method.

In order to achieve the above described objective, the present invention provides a content-centric network on-demand distance vector route method comprising:
step 1), broadcasting, by a request source node that needs to request a route, a route request packet CCN_RREQ to other nodes in a network to start a route discovery process, wherein the route request packet CCN_RREQ is carried in an interest packet of the content-centric network, and comprises at least the following information: a hash value of a requested content, an address of the request source node and a sequence number of the request source node;
step 2), replying, by a target node after receiving the route request packet CCN RREQ, with a route reply packet CCN_RREP, wherein the route reply packet CCN_RREP is carried in a data packet of the content-centric network, and comprises at least the following information: a hash value of the requested content, an address of a content provider and a sequence number of the content provider; and
step 3), establishing, by the request source node after receiving the route reply packet CCN_RREP returned by the target node, a path between the request source node and the target node according to content contained in the packet.

The above-described technical solution further comprises:
step 4) deleting an invalid path with a route error packet CCN_RRER when a node is invalid or a route is invalid due to an update of a cache, wherein the route error packet CCN_RRER comprises at least: an unreachable requested content, a number of entries of the unreachable requested content, an identification of an unreachable content provider and a sequence number of the unreachable content provider.

In the above-described technical solution, the step 2) comprises:
step 201), receiving, by a node, the route request packet CCN_RREQ;
step 202), checking, by the node, whether the route request packet CCN_RREQ is transmitted by the present node itself, that is, whether the request source node in the route request packet CCN_RREQ is the present node; if yes, performing the next step, otherwise turning to step 204);
step 203), discarding the route request packet CCN RREQ, and ending operations;
step 204), checking, by the node, whether the received route request packet CCN_RREQ has been received previously; if yes, performing the step 203), otherwise performing the next step;
step 205), checking, by the node, whether the content requested by the route request packet CCN_RREQ exists in its own cache table; if yes, the node being the content provider, and performing the next step, otherwise turning to step 207);
step 206), replying with the route reply packet CCN_RREP to the node that transmits the route request packet CCN_RREQ;
step 207), reviewing, by the node, whether an entry corresponding to a valid path of the content requested by the route request packet CCN_RREQ exists in a route table; if yes, performing step 206), otherwise performing the next step; and
step 208), caching and broadcasting the route request packet CCN RREQ.

In the above-described technical solution, the step 3) comprises:
step 301), receiving, by a node, the route reply packet CCN_RREP;
step 302), judging, by the node, whether a valid route from the present node to a target hash is saved in its own route table; if yes, performing the next step, otherwise turning to step 307); wherein the target hash refers to the hash value of the content contained in the route reply packet CCN_RREP, and the valid route refers to a route that a lifetime of the route entry does not expire;
step 303), judging, by the node, whether a valid route to a content target in the route reply packet CCN_RREP of the same content provider exists in its own route table; if yes, performing the next step, otherwise turning to step 306);
step 304), comparing a sequence number of a destination node of a respective route entry in the route table and a sequence number of a destination node in the route reply packet CCN-RREP; if the sequence number of the destination node in the route reply packet CCN_RREP is more recent, turning to step 307), otherwise performing the next step;
step 305) performing step 307) if the sequence number of the destination node in the route reply packet CCN_RREP is the same as the sequence number of the destination node of the respective route entry in the route table, but has a less number of hops; otherwise turning to step 308);
step 306), judging whether a multi-path table item of the content in the route table is already saturated; if yes, turning to step 308), otherwise performing the next step;
step 307), adding or updating the respective route entry, forwarding the route reply packet CCN_RREP to a previous hop node according to an Intesrst table of the CNN, and ending operations; and
step 308), discarding the route reply packet CCN_RREP, and ending operations.

In the above-described technical solution, the step 4) comprises:
step 401), detecting, by a previous hop node of the destination node in the path, whether the route is invalid; if the node when forwarding the interest packet finds that a distance from itself to the content provider is 1, the node is the previous hop node of the destination node, and the node starts a timeout timer when sending the interest packet;
step 402), judging, by the node, that the path is already invalid, if the timeout timer has already expired, but the previous hop node of the destination node does not receive the data packet sent by a corresponding content provider as expected;
step 403), marking, by the previous hop node of the destination node, a corresponding path as invalid, and sending the CCN_RRER packet to its pervious hop node in the corresponding path to notify the previous hop node that this path is already invalid; and
step 404), reviewing first, by the node after receiving the CCN_RRER packet, whether a valid path of the corresponding content provider exists; if yes, marking the corresponding path as invalid, and sending the CCN_RRER packet to the previous hop node in the corresponding path to notify the node that the path is already invalid; if no, discarding the CCN RRER packet.

The advantages of the present invention are in that:
1. the method according to the present invention decreases route table items, improves the efficiency of route querying, and reduces effectively the routing cost, by establishing the route on-demand;
2. the method deletes the invalid route timely by detecting the invalid route and performing route repair.

### BRIEF DESCRIPTION OF THE DRAWINGS

Fig. 1 is a schematic diagram of a data structure of a route request packet CCN RREQ;
Fig. 2 is a schematic diagram of a data structure of a route reply packet CCN_RREP;
Fig. 3 is a schematic diagram of a data structure of a route error packet CCN_RRER;
Fig. 4 is a flow diagram for a target node replying with the route reply packet CCN_RREP in a method according to the present invention;
Fig. 5 is a flow diagram for establishing a path between a request source and a target node in a method according to the present invention.

### DETAILED DESCRIPTION OF THE INVENTION

Now the present invention is further described in conjunction with the accompanying drawings.

A content-centric network on-demand distance vector route method according to the present invention mainly adopts three route control messages, which are respectively: a route request packet CCN_RREQ, a route reply packet CCN_RREP and a route error packet CCN_RRER, wherein the route request packet CCN_RREQ may be carried in an interest packet of the content-centric network, and include the following information: a hash valve of a requested content, an address of a requesting source node, a sequence number of the requesting source node or the like; the route reply packet CCN_RREP may be carried in a data packet of the content-centric network, and include the following information: a hash value of the requested content, an address of a content provider, a sequence number of the content provider and the like.

The above described three route control messages play an important role in the route method according to the present invention. Data structures of these packets are explained further below.

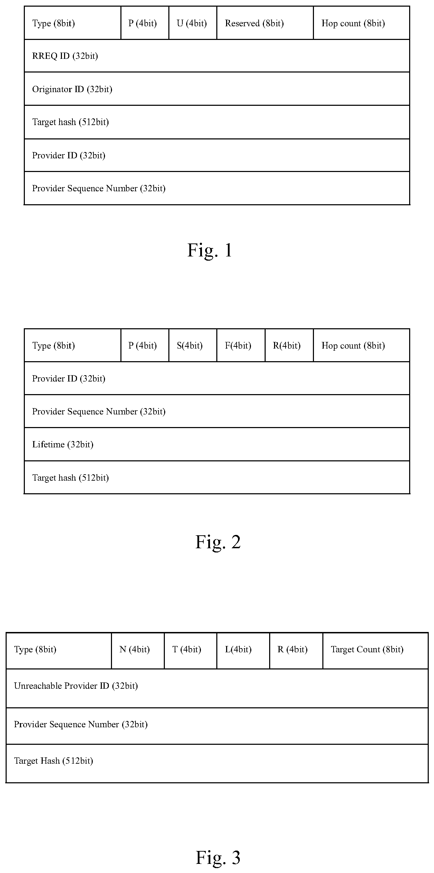

Fig. 1 is a schematic diagram of a data structure of a route request packet CCN_RREQ, wherein Type refers to a type of the packet, a value thereof is set as 1. P is a flag bit that only a content provider may reply with the CCN-RREQ packet, meaning that only the content provider may respond to this CCN-RREQ packet and an intermediate node which has a route but has no content cannot respond to this CCN-RREQ packet. U is a sequence number-unknowable flag bit, which means that the sequence number of the content provider is unknown for the present node. Reserved is a reserved bit, the value thereof is 0 currently. Hop Count represents the number of hops from an originating node for the CCN-RREQ packet to a node processing the packet. RREQ ID is an ID of the CCN-RREQ packet, and generated by the node generating the CCN packet, and used together with a subsequent Originator ID. Originator ID is an ID of a node generating the CCN packet. Target hash is a hash value of the requested content. Provider ID is an ID of a content provider known by the present node. Provider Sequence Number is a serial number of the above described Provider ID. The last two items may be null if there is no known content provider.

Fig. 2 is a schematic diagram of a data structure of a route reply packet CCN_RREP, wherein Type refers to a type of the packet, a value thereof is set as 2. P is a content provider flag bit, which means that the CCN-RREP packet is transmitted by the content provider. S, F and R are reserved bits, the values thereof are 0 currently. Hop Count represents the number of hops from a node generating the CCN-RREP packet to a node processing the packet. Provider ID is an ID of the node generating the CCN-RREP packet. Provider Sequence Number is a sequence number of a generating node associated with the route. Lifetime is a lifetime of a route in ms. Target hash is a hash value of a required content.

Fig. 3 is a schematic diagram of a data structure of a route error packet CCN_RRER, wherein Type is a type of the packet, the value thereof is set as 2. N is a "don't delete" flag bit. T is a target hash-unreachable flag bit. L is a link interruption flag bit. R is a reserved bit, the value thereof is 0 currently. Target Count is the number of entries of unreachable hash values in the message. Unreachable Provider ID is an ID of an unreachable content provider. Unreachable Provider Sequence number is a sequence number associated with the above-described content provider. Target Hash is a hash value of unreachable content.

Specific implementation steps of the method according to the present invention are explained below in detail.

Step 1), broadcasting, by a node when needing to request a route (this node is also referred to as a request source), a route request packet CCN_RREQ to other nodes in a network to start a route discovery process;

step 2), replying, by a target node after receiving the route request packet CCN RREQ, with a route reply packet CCN_RREP;

step 3), establishing, by the request source after receiving the route reply packet CCN_RREP returned by the target node, a path between the request source and the target node according to content contained in the packet.

In step 1), the circumstances that the node needs to request a route comprise: when a node needs a route to a hash value of a certain content, and no corresponding valid route entries exists in a route table of the node.

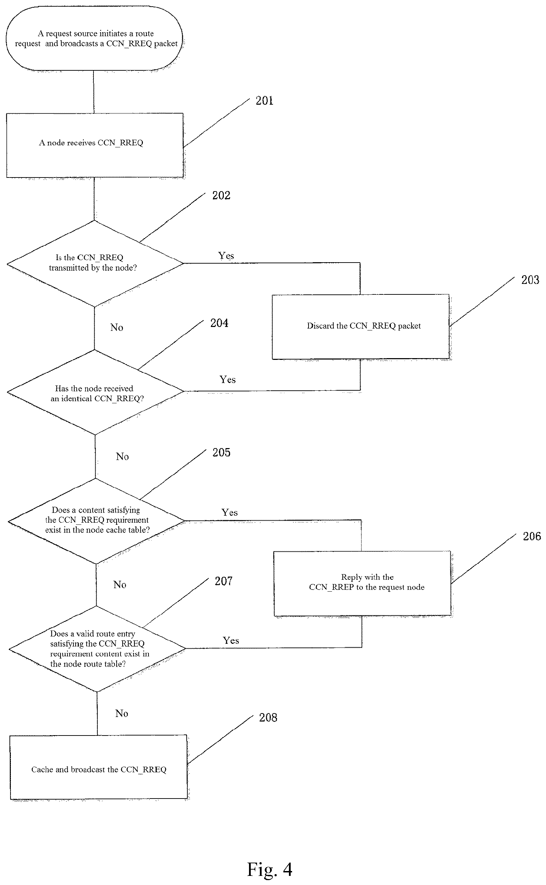

Referring to Fig. 4, the step 2) further comprises:
step 201), receiving, by a node, the route request packet CCN_RREQ;
step 202), checking, by the node, whether the route request packet CCN_RREQ is transmitted by the present node on its own, that is, whether a request source node in the route request packet CCN_RREQ is the present node; if yes, performing the next step, otherwise turning to step 204);
step 203), discarding the route request packet CCN_RREQ, ending operations;
step 204), checking, by the node, whether the received route request packet CCN_RREQ has been received previously; if yes, performing step 203), otherwise performing the next step;
step 205), checking, by the node, whether the content requested by the route request packet CCN_RREQ (i.e. content corresponding to the hash value of the requested content in the route request packet CCN_RREQ) exists in its own cache table; if yes, the node being the content provider, and performing the next step, otherwise turning to step 207);
step 206), replying with the route reply packet CCN_RREP to the node that transmits the route request packet CCN_RREQ;
step 207), reviewing, by the node, whether an entry corresponding to a valid path of the content requested by the route request packet CCN_RREQ exists in the route table; if yes, performing step 206), otherwise performing the next step;
step 208), caching and broadcasting the route request packet CCN RREQ; the step of caching the route request packet CCN_RREQ can prevent the identical CCN_RREQ packet from being received by the node later, and the step of broadcasting the route request packet CCN_RREQ aids other nodes in the network to receive the route request packet CCN RREQ.

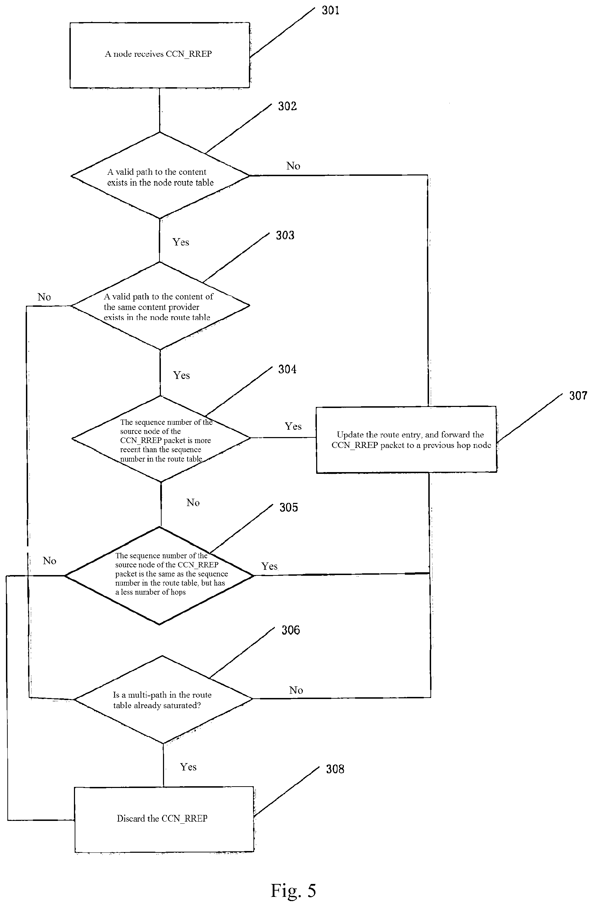

Referring to Fig. 5, the step 3) further comprises:
step 301), receiving, by a node, the route reply packet CCN_RREP; the node may be an arbitrary node between a destination node to the request source node;
step 302), judging, by the node, whether a valid route from the present node to a target hash is saved in its own route table; if yes, performing the next step, otherwise turning to step 307); wherein the target hash refers to the hash value of the content contained in the route reply packet CCN_RREP; the valid route refers to the route that a lifetime of the route entry does not expire;
step 303), judging, by the node, whether a valid route to a content target in the route reply packet CCN_RREP of the same content provider exists in its own route table; if yes, performing the next step, otherwise turning to step 306);
step 304), comparing a sequence number of the destination node of a respective route entry in the route table and a sequence number of the destination node in the route reply packet CCN_RREP, if the sequence number of the destination node in the route reply packet CCN_RREP is more recent, turning to step 307), otherwise performing the next step;
step 305), performing step 307) if the sequence number of the destination node in the route reply packet CCN_RREP is the same as the sequence number of the destination node of the respective route entry in the route table but has a less number of hops; otherwise turning to step 308);
step 306), judging whether a multi-path table item of the content in the route table is statured; if yes, turning to step 308), otherwise performing the next step;
step 307), adding or updating a respective route entry, forwarding the route reply packet CN_RREP to the previous hop node according to an Intesrst table of CCN, and ending operations;
step 308), discarding the route reply packet CCN_RREP, and ending operations.

As an optional implementation, the method according to the present invention further comprises:
step 4), deleting an invalid path with a route error packet CCN_RRER when the node is invalid or the route is invalid due to the update of a cache.

This step specifically comprises:
step 401), detecting, by a previous hop node of the destination node in the path, whether the route is invalid; if a node when forwarding an interest packet finds that the distance from itself to the content provider is 1, the node is the previous hop node of the destination node, and the node starts a time-out timer when sending the interest packet;
step 402), judging, by the node, that this path is already invalid if the time-out timer has already expires and the previous hop node of the destination node has not received a data packet sent by a corresponding content provider as expected;
step 403), marking, by the previous hop node of the destination node, a corresponding path as invalid, and sending the CCN_RRER packet to its previous node in the corresponding path to notify the previous hop node that this path is already invalid;
step 404), reviewing first, by the node after receiving the CCN_RRER packet, whether a valid path of the corresponding content provider exists; if yes, marking the corresponding path as invalid and sending the CCN_RRER packet to the previous hop node in the corresponding path to notify the node that this path is already invalid; if no, discarding the CCN_RRER packet.

Finally, it should be noted that the aforementioned embodiments are only used for illustrating, rather than limiting the technical solution of the present invention. Although the present invention has been described in detail with reference to the embodiments, those skilled in the art should understand that modifications or equivalent substitutions can be made to the technical solution of the present invention without departing from the scope of the technical solution of the present invention, and thereby should all be covered by the scope of the claims of the present invention.

## Claims

1. A content-centric network on-demand distance vector route method, comprising:
step 1), broadcasting, by a request source node that needs to request a route, a route request packet CCN_RREQ to other nodes in a network to start a route discovery process, wherein the route request packet CCN_RREQ is carried in an interest packet of the content-centric network, and comprises at least the following information: a hash value of a requested content, an address of the request source node and a sequence number of the request source node;
step 2), replying, by a target node after receiving the route request packet CCN_RREQ, with a route reply packet CCN_RREP (206), wherein the route reply packet CCN_RREP is carried in a data packet of the content-centric network, and comprises at least the following information: a hash value of the requested content, an address of a content provider and a sequence number of the content provider; and
step 3), establishing, by the request source node after receiving the route reply packet CCN_RREP returned by the target node, a path between the request source node and the target node according to content contained in the packet.

2. The content-centric network on-demand distance vector route method of claim 1, further comprising:
step 4) deleting an invalid path with a route error packet CCN_RRER when a node is invalid or a route is invalid due to an update of a cache, wherein the route error packet CCN_RRER comprises at least: an unreachable requested content, a number of entries of the unreachable requested content, an identification of an unreachable content provider and a sequence number of the unreachable content provider.

3. The content-centric network on-demand distance vector route method of claim 1 or 2, wherein the step 2) comprises:
step 201), receiving, by a node, the route request packet CCN_RREQ;
step 202), checking, by the node, whether the route request packet CCN_RREQ is transmitted by the present node itself, that is, whether the request source node in the route request packet CCN_RREQ is the present node; if yes, performing the next step, otherwise turning to step 204);
step 203), discarding the route request packet CCN_RREQ, and ending operations;
step 204), checking, by the node, whether the received route request packet CCN RREQ has been received previously; if yes, performing the step 203), otherwise performing the next step;
step 205), checking, by the node, whether the content requested by the route request packet CCN_RREQ exists in its own cache table; if yes, the node being the content provider, and performing the next step, otherwise turning to step 207);
step 206), replying with the route reply packet CCN_RREP to the node that transmits the route request packet CCN_RREQ;
step 207), reviewing, by the node, whether an entry corresponding to a valid path of the content requested by the route request packet CCN_RREQ exists in a route table; if yes, performing step 206), otherwise performing the next step; and
step 208), caching and broadcasting the route request packet CCN_RREQ.

4. The content-centric network on-demand distance vector route method of claim 1 or 2, wherein the step 3) comprises:
step 301), receiving, by a node, the route reply packet CCN_RREP;
step 302), judging, by the node, whether a valid route from the present node to a target hash is saved in its own route table; if yes, performing the next step, otherwise turning to step 307); wherein the target hash refers to the hash value of the content contained in the route reply packet CCN_RREP, and the valid route refers to a route that a lifetime of the route entry does not expire;
step 303), judging, by the node, whether a valid route to a content target in the route reply packet CCN_RREP of the same content provider exists in its own route table; if yes, performing the next step, otherwise turning to step 306);
step 304), comparing a sequence number of a destination node of a respective route entry in the route table and a sequence number of a destination node in the route reply packet CCN-RREP; if the sequence number of the destination node in the route reply packet CCN_RREP is more recent, turning to step 307), otherwise performing the next step;
step 305) performing step 307) if the sequence number of the destination node in the route reply packet CCN_RREP is the same as the sequence number of the destination node of the respective route entry in the route table, but has a less number of hops; otherwise turning to step 308);
step 306), judging whether a multi-path table item of the content in the route table is already saturated; if yes, turning to step 308), otherwise performing the next step;
step 307), adding or updating the respective route entry, forwarding the route reply packet CCN_RREP to a previous hop node according to an Intesrst table of the CNN, and ending operations; and
step 308), discarding the route reply packet CCN_RREP, and ending operations.

5. The content-centric network on-demand distance vector route method of claim 2, wherein the step 4) comprises:
step 401), detecting, by a previous hop node of the destination node in the path, whether the route is invalid; if the node when forwarding the interest packet finds that a distance from itself to the content provider is 1, the node is the previous hop node of the destination node, and the node starts a timeout timer when sending the interest packet;
step 402), judging, by the node, that the path is already invalid, if the timeout timer has already expired, but the previous hop node of the destination node does not receive the data packet sent by a corresponding content provider as expected;
step 403), marking, by the previous hop node of the destination node, a corresponding path as invalid, and sending the CCN_RRER packet to its pervious hop node in the corresponding path to notify the previous hop node that this path is already invalid; and
step 404), reviewing first, by the node after receiving the CCN RRER packet, whether a valid path of the corresponding content provider exists; if yes, marking the corresponding path as invalid, and sending the CCN RRER packet to the previous hop node in the corresponding path to notify the node that the path is already invalid; if no, discarding the CCN RRER packet.

## Patentansprüche

1. On-Demand-Abstandsvektorroutenverfahren eines inhaltsorientierten Netzes, umfassend:
Schritt 1), Übertragen, über einen Anforderungsquellknoten, der eine Route anfragen muss, eines Route-Request-Pakets CCN_RREQ an andere Knoten in einem Netz, um einen Route-Discovery-Prozess zu starten, wobei das Route-Request-Paket CCN_RREQ in einem Interessenpaket des inhaltsorientierten Netzes getragen wird und mindestens die folgenden Informationen umfasst: einen Hash-Wert eines angeforderten Inhalts, eine Adresse des Anforderungsquellknotens und eine Sequenznummer des Anforderungsquellknotens;
Schritt 2), Antworten über einen Zielknoten nach dem Empfangen des Route-Request-Pakets CCN_RREQ mit einem Route-Reply-Paket CCN_RREP (206),
Wobei das Route-Reply-Paket CCN_RREP in einem Datenpaket des inhaltsorientierten Netzes getragen wird und mindestens die folgenden Informationen umfasst: einen Hash-Wert des angeforderten Inhalts, eine Adresse eines Inhaltsanbieters und eine Sequenznummer des Inhaltsanbieters; und
Schritt 3), Erstellen durch den Anforderungsquellknoten nach dem Empfangen des Route-Reply-Pakets CCN_RREP, das von dem Zielknoten zurückgesendet wird, eines Pfades zwischen dem Anforderungsquellknoten und dem Zielknoten gemäß dem in dem Paket enthaltenen Inhalt.

2. On-Demand-Abstandsvektorroutenverfahren eines inhaltsorientierten Netzes nach Anspruch 1, ferner umfassend:
Schritt 4), Löschen einen ungültigen Pfades mit einem Route-Error-Paket CCN_RRER, wenn ein Knoten ungültig ist oder eine Route ungültig ist aufgrund einer Aktualisierung eines Cache, wobei das Route-Error-Paket CCN_RRER mindestens umfasst: einen unerreichbaren angeforderten Inhalt, eine Reihe von Eingaben des unerreichbaren angeforderten Inhalts, eine Identifizierung eines unerreichbaren Inhaltsanbieters und eine Sequenznummer des unerreichbaren Inhaltsanbieters.

3. On-Demand-Abstandsvektorroutenverfahren eines inhaltsorientierten Netzes nach Anspruch 1 oder 2, wobei Schritt 2) umfasst:
Schritt 201), Empfangen des Route-Request-Pakets CCN_RREQ durch einen Knoten;
Schritt 202), Prüfen durch den Knoten, ob das Route-Request-Paket CCV_RREQ von dem vorliegenden Knoten selbst übertragen wird, das heißt, ob der Anforderungsquellknoten in dem Route-Request-Paket CCV_RREQ der vorliegende Knoten ist; wenn ja, Durchführen des nächsten Schritts, andernfalls Fortfahren mit Schritt 204);
Schritt 203), Verwerfen des Route-Request-Pakets CCN_RREQ und Beenden der Operationen;
Schritt 204), Prüfen durch den Knoten, ob das empfangene Route-Request-Paket CCN_RREQ vorher empfangen wurde; wenn ja, Durchführen des Schritts 203), andernfalls Durchführen des nächsten Schritts;
Schritt 205), Prüfen durch den Knoten, ob der von dem Route-Request-Paket CCN_RREQ angeforderte Inhalt in seiner eigenen Cache-Tabelle vorhanden ist; wenn ja, ist der Knoten der Inhaltsanbieter und Durchführen des nächsten Schritts, andernfalls Fortfahren mit Schritt 207);
Schritt 206), Antworten mit dem Route-Reply-Paket CCN_RREP an den Knoten, der das Route-Request-Paket CCN_RREQ überträgt;
Schritt 207), Überprüfen durch den Knoten, ob ein Eintrag, der einem gültigen Pfad des von dem Route-Request-Paket CCN_RREQ angeforderten Inhalts entspricht, in einer Routentabelle vorhanden ist; wenn ja, Durchführen von Schritt 206), andernfalls Durchführen des nächsten Schritts; und
Schritt 208), Caching und Übertragen des Route-Request-Pakets CCN_RREQ.

4. On-Demand-Abstandsvektorroutenverfahren eines inhaltsorientierten Netzes nach Anspruch 1 oder 2, wobei Schritt 3) umfasst:
Schritt 301), Empfangen des Route-Reply-Pakets CCN_RREP durch einen Knoten;
Schritt 302), Beurteilen durch den Knoten, ob eine gültige Route von dem vorhandenen Knoten zu einem Ziel-Hash in seiner eigenen Routentabelle gespeichert ist; wenn ja, Durchführen des nächsten Schritts, andernfalls Fortfahren mit Schritt 307); wobei der Ziel-Hash sich auf den Hash-Wert des in dem Route-Reply-Paket CCN_RREP enthaltenen Inhalts bezieht und die gültige Route sich auf eine Route bezieht, dass eine Lebensdauer des Routeneintrags nicht abläuft;
Schritt 303), Beurteilen durch den Knoten, ob eine gültige Route zu einem Inhaltsziel in den Route-Reply-Paket CCN_RREP desselben Inhaltsanbieters in seiner eigenen Routentabelle vorhanden ist; wenn ja, Durchführen des nächsten Schritts, andernfalls Fortfahren mit Schritt 306);
Schritt 304), Vergleichen einer Sequenznummer eines Zielknotens einer jeweiligen Routeneingabe in der Routentabelle und einer Sequenznummer eines Zielknotens in dem Route-Reply-Paket CCN_RREP; wenn die Sequenznummer des Zielknotens in dem Route-Reply-Paket CCN_RREP neuer ist, Fortfahren mit Schritt 307), andernfalls Durchführen des nächsten Schritts;
Schritt 305), Durchführen von Schritt 307), wenn die Sequenznummer des Zielknotens in dem Route-Reply-Paket CCN_RREP die gleiche ist wie die Sequenznummer des Zielknotens des jeweiligen Routeneintrags in der Routentabelle, aber eine geringere Anzahl von Hops aufweist; andernfalls Fortfahren mit Schritt 308);
Schritt 306), Beurteilen, ob ein Multi-Path-Tabellenelement des Inhalts in der Routentabelle bereits gesättigt ist; wenn ja, Fortfahren mit Schritt 308), andernfalls Durchführen des nächsten Schritts;
Schritt 307), Hinzufügen oder Aktualisieren des jeweiligen Routeneintrags, Weiterleiten des Route-Reply-Pakets CCN_RREP an einen vorherigen Hop-Knoten gemäß einer Interessentabelle des CNN und Beenden der Operationen; und
Schritt 308), Verwerfen des Route-Reply-Pakets CCN_RREP und Beenden der Operationen.

5. On-Demand-Abstandsvektorroutenverfahren eines inhaltsorientierten Netzes nach Anspruch 2, wobei Schritt 4) umfasst:
Schritt 401), Erkennen durch einen vorherigen Hop-Knoten des Zielknotens in dem Pfad, ob die Route ungültig ist; wenn der Knoten beim Weiterleiten des Interessenpakets feststellt, dass ein Abstand von ihm selbst zu dem Inhaltsanbieter 1 beträgt, ist der Knoten der vorherige Hop-Knoten des Zielknotens und der Knoten startet beim Senden des Interessenpakets einen Timeout-Timer;
Schritt 402), Beurteilen durch den Knoten, dass der Pfad bereits ungültig ist, falls der Timeout-Timer bereits abgelaufen ist, aber der vorherige Hop-Knoten des Zielknotens das Datenpaket, das von einem entsprechenden Inhaltsanbieter gesendet wird, nicht wie erwartet empfängt;
Schritt 403), Markieren durch den vorherigen Hop-Knoten des Zielknotens, eines entsprechenden Pfades als ungültig und Senden des CCN_RRER-Pakets an seinen vorherigen Hop-Knoten in dem entsprechenden Pfad, um dem vorherigen Hop-Knoten mitzuteilen, dass dieser Pfad bereits ungültig ist; und
Schritt 404), zuerst Überprüfen durch den Knoten nach dem Empfangen des CCN_RRER-Pakets, ob ein gültiger Pfad des entsprechenden Inhaltsanbieters vorhanden ist; wenn ja, Markieren des entsprechenden Pfades als ungültig und Senden des CCN_RRER-Pakets an den vorherigen Hop-Knoten in dem entsprechenden Pfad, um dem Knoten mitzuteilen, dass der Pfad bereits ungültig ist; wenn nicht, Verwerfen des CCN_RRER-Pakets.

## Revendications

1. Procédé de routage à vecteur de distance à la demande dans un réseau centré sur le contenu, comprenant :
étape 1), diffuser, par un noeud source de requête qui a besoin de demander un routage, un paquet de requête de routage CCN_RREQ à destination d'autres noeuds dans un réseau pour démarrer un processus de découverte de routage, le paquet de requête de routage CCN_RREQ étant transporté dans un paquet d'intérêt du réseau centré sur le contenu, et comprenant au moins les informations suivantes : une valeur de hachage d'un contenu demandé, une adresse du noeud source de requête et un numéro de séquence du noeud source de requête ;
étape 2), répondre, par un noeud cible après réception du paquet de requête de routage CCN_RREQ, avec un paquet de réponse de routage CCN_RREP (206),
le paquet de réponse de routage CCN_RREP étant transporté dans un paquet de données du réseau centré sur le contenu, et comprenant au moins les informations suivantes : une valeur de hachage du contenu demandé, une adresse d'un fournisseur de contenu et un numéro de séquence du fournisseur de contenu ; et
étape 3), établir, par le noeud source de requête après réception du paquet de réponse de routage CCN_RREP renvoyé par le noeud cible, un chemin entre le noeud source de requête et le noeud cible selon le contenu contenu dans le paquet.

2. Procédé de routage à vecteur de distance à la demande dans un réseau centré sur le contenu selon la revendication 1, comprenant en outre :
étape 4) supprimer un chemin non valide avec un paquet d'erreur de routage CCN_RRER lorsqu'un noeud n'est pas valide ou qu'une route n'est pas valide en raison d'une mise à jour d'une mémoire cache, le paquet d'erreur de routage CCN_RRER comprenant au moins : un contenu demandé ne pouvant pas être atteint, un nombre d'entrées du contenu demandé ne pouvant pas être atteint, une identification d'un fournisseur de contenu ne pouvant pas être atteint et un numéro de séquence du fournisseur de contenu ne pouvant pas être atteint.

3. Procédé de routage à vecteur de distance à la demande dans un réseau centré sur le contenu selon la revendication 1 ou 2, dans lequel l'étape 2) comprend :
étape 201), recevoir, par un noeud, le paquet de requête de routage CCN_RREQ ;
étape 202), vérifier, par le noeud, si le paquet de requête de routage CCN_RREQ est ou non transmis par le présent noeud lui-même, c'est-à-dire, si le noeud source de requête dans le paquet de requête de routage CCN_RREQ est ou non le présent noeud ; si tel est le cas, réaliser l'étape suivante, autrement aller à l'étape 204) ;
étape 203), supprimer le paquet de requête de routage CCN_RREQ, et mettre fin aux opérations ;
étape 204), vérifier, par le noeud, si le paquet de requête de routage CCN_RREQ reçu a ou non été reçu précédemment ; si tel est le cas, réaliser l'étape 203), autrement réaliser l'étape suivante ;
étape 205), vérifier, par le noeud, si le contenu demandé par le paquet de requête de routage CCN_RREQ existe ou non dans sa propre table de cache ; si tel est le cas, le noeud est le fournisseur de contenu, et réaliser l'étape suivante, autrement aller à l'étape 207) ;
étape 206), répondre avec le paquet de réponse de routage CCN_RREP au noeud qui transmet le paquet de requête de routage CCN_RREQ ;
étape 207), vérifier, par le noeud, si une entrée correspondant à un chemin valide du contenu demandé par le paquet de requête de routage CCN_RREQ existe ou non dans une table de routage ; si tel est le cas, réaliser l'étape 206), autrement réaliser l'étape suivante ; et
étape 208), mettre en cache et diffuser le paquet de requête de routage CCN_RREQ.

4. Procédé de routage à vecteur de distance à la demande dans un réseau centré sur le contenu selon la revendication 1 ou 2, dans lequel l'étape 3) comprend :
étape 301), recevoir, par un noeud, le paquet de réponse de routage CCN_RREP ;
étape 302), déterminer, par le noeud, si un routage valide allant du présent noeud à un hachage cible est ou non sauvegardé dans sa propre table de routage ; si tel est le cas, réaliser l'étape suivante, autrement aller à l'étape 307) ; le hachage cible se rapportant à la valeur de hachage du contenu contenu dans le paquet de réponse de routage CCN_RREP, et le routage valide se rapportant à un routage dont une durée de vie de l'entrée de routage n'expire pas ;
étape 303), déterminer, par le noeud, si un routage valide vers une cible de contenu dans le paquet de réponse de routage CCN_RREP du même fournisseur de contenu existe ou non dans sa propre table de routage ; si tel est le cas, réaliser l'étape suivante, autrement aller à l'étape 306) ;
étape 304), comparer un numéro de séquence d'un noeud de destination d'une entrée de routage respective dans la table de routage et un numéro de séquence d'un noeud de destination dans le paquet de réponse de routage CCN_RREP ; si le numéro de séquence du noeud de destination dans le paquet de réponse de routage CCN_RREP est plus récent, aller à l'étape 307), autrement réaliser l'étape suivante ;
étape 305), réaliser l'étape 307) si le numéro de séquence du noeud de destination dans le paquet de réponse de routage CCN_RREP est le même que le numéro de séquence du noeud de destination de l'entrée de routage respective dans la table de routage, mais a un nombre inférieur de sauts ; autrement aller à l'étape 308) ;
étape 306), déterminer si un élément de table multichemin du contenu dans la table de routage est ou non déjà saturé ; si tel est le cas, aller à l'étape 308), autrement réaliser l'étape suivante ;
étape 307), ajouter ou mettre à jour l'entrée de routage respective, transférer le paquet de réponse de routage CCN_RREP vers un noeud de saut précédent selon une table d'intérêt du CCN, et mettre fin aux opérations ; et
étape 308), supprimer le paquet de réponse de routage CCN_RREP, et mettre fin aux opérations.

5. Procédé de routage à vecteur de distance à la demande dans un réseau centré sur le contenu selon la revendication 2, dans lequel l'étape 4) comprend :
étape 401), détecter, par un noeud de saut précédent du noeud de destination dans le chemin, si le routage est ou non non valide ; si le noeud, lors du transfert du paquet d'intérêt, trouve qu'une distance de lui-même au fournisseur de contenu est égale à 1, le noeud est le noeud de saut précédent du noeud de destination, et le noeud démarre un temporisateur de temporisation lors de l'envoi du paquet d'intérêt ;
étape 402), déterminer, par le noeud, que le chemin est déjà non valide, si le temporisateur de temporisation a déjà expiré, mais à condition que le noeud de saut précédent du noeud de destination ne reçoive pas le paquet de données envoyé par un fournisseur de contenu correspondant comme prévu ;
étape 403), marquer, par le noeud de saut précédent du noeud de destination, un chemin correspondant comme non valide, et envoyer le paquet CCN_RRER à son noeud de saut précédent dans le chemin correspondant pour avertir le noeud de saut précédent du fait que ce chemin est déjà non valide ; et
étape 404), vérifier en premier, par le noeud, après réception du paquet CCN_RRER, si un chemin valide du fournisseur de contenu correspondant existe ou non ; si tel est le cas, marquer le chemin correspondant comme non valide, et envoyer le paquet CCN_RRER au noeud de saut précédent dans le chemin correspondant pour avertir le noeud du fait que le chemin est déjà non valide ; si tel n'est pas le cas, supprimer le paquet CCN_RRER.
